Europäisches Patentamt

European Patent Office

Office européen des brevets

(19)

(11) Veröffentlichungsnummer: **0 235 546 B1**

(12) **EUROPÄISCHE PATENTSCHRIFT**

(45) Veröffentlichungstag der Patentschrift: 24.07.91

(21) Anmeldenummer: 87100967.6

(22) Anmeldetag: 23.01.87

(51) Int. Cl.⁵: **B23K 35/26**, C04B 37/00, C04B 37/02

(54) Verwendung einer Weichlotlegierung zum Verbinden von Keramikteilen.

(30) Priorität: 19.02.86 DE 3605170

(43) Veröffentlichungstag der Anmeldung:
09.09.87 Patentblatt 87/37

(45) Bekanntmachung des Hinweises auf die
Patenterteilung:
24.07.91 Patentblatt 91/30

(84) Benannte Vertragsstaaten:
AT BE CH DE ES FR GB GR IT LI LU NL SE

(56) Entgegenhaltungen:
DE-B- 1 533 542
GB-A- 2 114 040
US-A- 2 805 944
US-A- 3 001 269

(73) Patentinhaber: **Degussa Aktiengesellschaft**
**Weissfrauenstrasse 9**
**W-6000 Frankfurt am Main 1(DE)**

(72) Erfinder: **Böhm, Wolfgang, Dr.**
**Kronbergweg 2**
**W-8755 Alzenau-Albstadt(DE)**
Erfinder: **Hausselt, Jürgen, Dr.**
**Weinbergring 37**
**W-6456 Langenselbold(DE)**
Erfinder: **Weise, Wolfgang, Dr.**
**Merianstrasse 40**
**W-6000 Frankfurt am Main(DE)**
Erfinder: **Malikowski, Willi**
**Brentanoplatz 11**
**W-8750 Aschaffenburg(DE)**

## Beschreibung

Die Erfindung betrifft die Verwendung einer Weichlotlegierung zum Verbinden von Keramikteilen untereinander oder mit Teilen aus Metallen, insbesondere zum Verbinden von Aluminiumoxidteilen mit Teilen aus Kupfer.

Der Einsatz keramischer Bauteile in der modernen Werkstofftechnik ist weitgehend von geeigneten Fügeverfahren abhängig.

Von den Verfahren zur Verbindung von Keramikteilen untereinander oder mit Metallen wir derzeit meist das Metallisieren der Keramik nach der Mangan-MolybdänMethode mit anschließendem Verbinden über die Metallschichten durch Löten angewendet. Dabei wir eine etwa 25-50 $\mu$m starke Suspensionsschicht bestehend aus 10-20 % Manganpulver und 80-90 % Molybdänpulver auf die Keramik aufgetragen. Beim anschließenden Einbrennen unter Wasserstoff mit entsprechendem Taupunkt erfolgt eine teilweise Oxidation der Pulver. Die Oxide bilden eine Verbindung (Spinelle) mit der Keramik. Zur besseren Benetzung durch die Lote wird noch eine Nickelschicht aufgebracht. Dieses Verfahren ist aufgrund der notwendigen Arbeitsschritte aufwendig und teuer.

In letzter Zeit kommen immer mehr Aktivlote auf Silber-Kupfer-Basis mit Titan-, Zirkon- oder Hafnium-Zusätzen zum Direktverbinden von Keramik mit Metallen zum Einsatz.

Damit lassen sich Ausdehnungslegierungen - (FeNi- und FeNiCo-Legierungen) und z.B. $Al_2 O_3$ vakuumdicht mit guten Festigkeiten unter Schutzgas oder im Vakuum verbinden.

Versuche, mit diesen Hartloten beispielsweise Kupferund Aluminiumoxid-Bauteile zu verbinden, erwiesen sich als recht schwierig. Einmal löst die AgCu-Lotschmelze bei Temperaturen über dem eutektischen Punkt je nach Zusammensetzung sehr stark das Kupfer des Bauteils auf. Das kann zur vollständigen Auflösung sehr dünner Kupfer-Bauteile (z.B. Membranen) führen. Andererseits ist die Differenz der thermischen Ausdehnungskoeffizienten zwischen Kupfer und Aluminiumoxid sehr groß. Das führt beim Abkühlen nach dem Löten zu Spannungen in den Grenzzonen der Verbindungsschicht. Die Festigkeitswerte werden durch die dabei entstehenden Mikrorisse herabgesetzt. Ein großer Anteil der gelöteten Proben weist daher Vakuumlecks auf.

Aus der US-PS 3,001,269 sind Lote zum Direktlöten von Keramik beschrieben, die neben 4 bis 10 Gew.% Titan und/oder Zirkonium 10 bis 85 Gew.% Blei, Rest Kupfer, Silber oder Nickel enthalten.

In der Praxis enthalten diese Lote 15 bis 35 Gew.% Blei und 60 bis 80 % Kupfer, Silber und Nickel. Diese Lote eignen sich nicht zum Verlöten von z.B. Kupfer mit Aluminiumoxid. Zum Verbinden von Quarzglas mit Metallteilen aus Molybdän, Wolfram oder Tantal kann man gemäß der DE-AS 15 33 542 Lote aus Zinn mit 2 bis 3 % Titan verwenden. Bekannt sind aus der US-PS 2,805,944 auch Lote aus Blei mit 0,5 bis 7 % Kupfer und 0,1 bis 3 % Titan zum Direktlöten von Keramikteilen.

Es war Aufgabe der vorliegenden Erfindung, Weichlotlegierungen zum Verbinden von Keramikteilen untereinander oder mit Teilen aus Metallen zu entwickeln, insbesondere zum Verbinden von Aluminiuoxidteilen mit Teilen aus Kupfer, die ohne vorheriges Metallisieren der Keramikoberflächen anwendbar sind, Kupfer und andere Metallegierungen nicht auflösen und auch größere Unterschiede im Ausdehnungsverhalten der zu verlötenden Teile kompensieren können.

Diese Aufgabe wird erfindungsgemäß durch die Verwendung einer Weichlotlegierung gelöst, die 86 bis 99 % Blei oder Zinn, 0 bis 13 % Silber, 0 bis 10 % Indium und 1 bis 10 % Titan und/oder Zirkonium und/oder Hafnium enthält.

Vorzugsweise verwendet man Weichlotlegierungen folgender Zusammensetzung:

a) 86 - 93 % Blei, 1-6 % Silber und 1-10 % Titan;

b) 86-92 % Blei, 4-10 % Indium und 1-10 % Titan;

c) 90-99 % Blei und 1-10 % Titan;

d) 86-95 % Zinn, 1-13 % Silber und 1-10 % Titan;

e) 86-95 % Zinn, 1-12 % Silber, 1-5 % Kupfer und 1-10 % Titan.

Diese Legierungen lassen sich leicht erschmelzen und zu Formteilen verarbeiten, beispielsweise zu Folien bis 100 $\mu$m Stärke und Drähten bis 500 $\mu$m Stärke. Sie besitzen Arbeitstemperaturen im Bereich von 700 bis 950 $^\circ$ C.

In Lötversuchen wurden Aluminiumoxidröhrchen $\emptyset$ 5,5 $^\times$ $\emptyset$ 8 $^\times$ 4,5 mm$^3$ und Kupferlektroden mit einem Lot aus 96 % Blei und 4 % Titan unter Schutzgas (Argon) direktgelötet. Bei den nachfolgenden Tests wurden Festigkeitswerte von 500 bis 800 N ermittelt. Bei Lötungen mit Loten der Zusammensetzung 86 % Pb 10 % In 4 % Ti wurden Festigkeitswerte von 640-1050 N erreicht. Die gemessenen Leckraten lagen bei $10^{-8}$ mbar 1 s$^{-1}$.

Mit diesen Loten konnte auch Stahl auf Oxid- und Nichtoxidkeramikteilen aufgelötet werden, ohne daß Spannungsrisse in der Keramik erkennbar waren. Die Festigkeiten der Verbindungen lagen bei 35 N/mm$^2$.

## Patentansprüche

1. Verwendung einer Weichlotlegierung zum Verbinden von Keramikteilen untereinander oder mit Teilen aus Metallen, insbesondere zum Verbinden von Aluminiumoxidteilen mit Teilen aus Kupfer,

dadurch gekennzeichnet,

daß sie 86 bis 99 % Blei oder Zinn, 0 bis 13 % Silber, 0 bis 10 % Indium und 1 bis 10 % Titan und/oder Zirkonium und/oder Hafnium enthält.

2. Verwendung einer Weichlotlegierung nach Anspruch 1,

dadurch gekennzeichnet,

daß sie 86 bis 93 % Blei, 1 bis 6 % Silber und 1 bis 10 % Titan enthält.

3. Verwendung einer Weichlotlegierung nach Anspruch 1,

dadurch gekennzeichnet,

daß sie 86 bis 92 % Blei, 4 bis 10 % Indium und 1 bis 10 % Titan enthält.

4. Verwendung einer Weichlotlegierung nach Anspruch 1,

dadurch gekennzeichnet,

daß sie 90 bis 99 % Blei und 1 bis 10 % Titan enthält.

5. Verwendung einer Weichlotlegierung nach Anspruch 1,

dadurch gekennzeichnet,

daß sie 86 bis 95 % Zinn, 1 bis 13 % Silber und 1 bis 10 % Titan enthält.

6. Verwendung einer Weichlotlegierung zum Verbinden von Keramikteilen,

dadurch gekennzeichnet,

daß sie 86 bis 95 % Zinn, 1 bis 12 % Silber, 1 bis 5 % Kupfer und 1 bis 10 % Titan enthält.

## Claims

1. The use of a soft solder for joining ceramic parts to one another or to parts of metals, more particularly for joining aluminium oxide parts to parts of copper, characterized in that it contains 86 to 99% lead or tin, 0 to 13% silver, 0 to 10% indium and 1 to 10% titanium and/or zirconium and/or hafnium.

2. The use of a soft solder as claimed in claim 1, characterized in that it contains 86 to 93% lead, 1 to 6% silver and 1 to 10% titanium.

3. The use of a soft solder as claimed in claim 1, characterized in that it contains 86 to 92% lead, 4 to 10% indium and 1 to 10% titanium.

4. The use of a soft solder as claimed in claim 1, characterized in that it contains 90 to 99% lead and 1 to 10% titanium.

5. The use of a soft solder as claimed in claim 1, characterized in that it contains 86 to 95% tin, 1 to 13% silver and 1 to 10% titanium.

6. The use of a soft solder for joining ceramic parts, characterized in that it contains 86 to 95% tin, 1 to 12% silver, 1 to 5% copper and 1 to 10% titanium.

## Revendications

1. Utilisation d'un alliage de brasage tendre pour l'assemblage de pièces céramiques entre elles ou avec des pièces à base de métaux, en particulier pour l'assemblage de pièces en oxyde d'aluminium avec des pièces à base de cuivre, caractérisée en ce que l'alliage contient de 86 à 99 % de plomb ou d'étain, de 0 à 13 % d'argent, de 0 à 10 % d'indium et de 1 à 10 % de titane et/ou de zirconium et/ou d'hafnium.

2. Utilisation d'un alliage de brasage tendre selon la revendication 1, caractérisée en ce que l'alliage contient de 86 à 93 % de plomb, de 1 à 6 % d'argent et de 1 à 10 % de titane.

3. Utilisation d'un alliage de brasage tendre selon la revendication 1, caractérisée en ce que l'alliage contient de 86 à 92 % de plomb, de 4 à 10 % d'indium et de 1 à 10 % de titane.

4. Utilisation d'un alliage de brasage tendre selon la revendication 1, caractérisée en ce que l'alliage contient de 90 à 99 % de plomb et de 1 à 10 % de titane.

5. Utilisation d'un alliage de brasage tendre selon la revendication 1, caractérisée en ce que l'alliage contient de 86 à 95 % d'étain, de 1 à 13 % d'argent et de 1 à 10 % de titane.

6. Utilisation d'un alliage de brasage tendre pour l'assemblage de pièces céramiques, caractérisée en ce que l'alliage contient de 86 à 95 % d'étain, de 1 à 12 % d'argent, de 1 à 5 % de cuivre et de 1 à 10 % de titane.